# EUROPEAN PATENT SPECIFICATION

(11) **EP 1 930 362 B1**
(45) Date of publication and mention of the grant of the patent: **26.01.2011**
(21) Application number: 06025477.8
(22) Date of filing: 08.12.2006
(51) Int. Cl.: C08J 7/00

(54) **Reactive composition containing an unsaturated backbone**
Reaktive Zusammensetzung mit einem ungesättigten Rückgrat
Composition réactive contenant une colonne vertébrale non saturée

(43) Date of publication of application: 11.06.2008
(73) Proprietor: Henkel AG & Co. KGaA, 40589 Düsseldorf (DE); UNICHEMA CHEMIE B.V., 2802 BE Gouda (NL)
(72) Inventor: Slark, Andrew Trevithick, Finchampstead Berkshire RG40 4YD (GB); Simo, Mireia Diaz, Slough Berkshire SL1 2GF (GB); Gide van Schijndel, Renee Josie, 6708 RC Wageningen (NL)

(56) References cited:
- WO-A-99/67340
- DE-A1- 19 853 813
- US-A- 3 546 148

## Description

The current invention relates to a solvent-free, reactive composition comprising at least a polymer A containing an in-chain olefinically unsaturated group and a photoinitiator, the process to manufacture the same and its uses as as adhesives and coatings.

Hot melt compositions are widely used in particular as adhesives. Thermoplastic hot melt adhesives preferably consist of formulated EVA or styrene block copolymers. Hot melt adhesives are solid at room temperature but, upon application of heat, melt to a liquid or fluid state in which form they are applied to a substrate. On cooling, the adhesive regains its solid form. The hard phase(s) formed upon cooling the adhesive imparts all of the cohesion (strength, toughness, creep and heat resistance) to the final adhesive. Reactive (curable) hot melt adhesives, which are also applied in molten form, cool to solidify and subsequently cure by a chemical crosslinking reaction. An advantage of reactive hot melt curable adhesives over traditional reactive liquid curing adhesives is their ability to provide "green strength" upon cooling prior to cure. Typical cure mechanisms include UV curing and moisture curing. UV curing is often much faster than moisture curing, but when designing adhesives, one must be careful that the adhesive surface is not overcured before a second substrate is placed on top, otherwise there will be poor contact, wetting and adhesion to the second surface. It is possible to bond 2 surfaces and then expose the adhesive to UV light through one of the substrates but the number of substrates that are transparent to UV radiation are very limited. UV curable hot melt adhesives are often pressure sensitive in nature, i.e. the Tg after cure remains below room temperature so that effective contact, wetting and adhesion is made to the second surface.

US 6,486,229 B1 provides high vinyl, radial multi-block styrene-butadiene-styrene-containing hot melt adhesive compositions that are radiation-curable to yield pressure-sensitive adhesive films with improved peel adhesion and cohesive strength, especially at elevated temperatures. These pressure-sensitive adhesive tapes are ideally suited for tape and label applications requiring good cohesive strength at elevated temperatures and yet are readily removed from painted or other surfaces leaving no adhesive residue. However, while having sufficient strength to bond flexible substrates, these systems typically lack the necessary cohesive strength to bond rigid materials such as wood, rigid plastics, metals, ceramics etc.

JP 11'279'515 A describes a reactive hot melt adhesive composition containing (A) a block copolymer having a first polymer block based on a vinyl aromatic compound and a second polymer block being a polymer block based on a conjugated diene compound or a polymer block of a partial hydrolyzate thereof in one molecule, which block copolymer being an epoxy-modified block copolymer in which the carbon-carbon double bonds of the conjugated diene compound is epoxidized; (B) a hydroxyl compound; and (C) a cationic polymerization initiator which can be activated by irradiation with an actinic radiation to cure the epoxy-modified block copolymer. These materials are difficult to make and also expensive. Although the cohesive strength is higher than the previous case, they often lead to fairly rigid adhesive bonds, lacking flexibility which is often required. Typically, high temperature curing is required to ensure good conversion, which is energy consuming, but also limits the use of these materials to substrates which can sustain these harsh conditions.

Moisture curing provides a relatively facile method for reactive hot melt adhesives. The majority of moisture curable reactive hot melt adhesives are based on polyurethanes. These adhesives consist primarily of isocyanate terminated polyurethane prepolymers that react with surface or ambient moisture in order to chain-extend, forming a new polyurethane polymer. Polyurethane prepolymers are conventionally obtained by reacting diols with diisocyanates. Methylene bisphenyl diisocyanate (MDI) is favored over lower molecular weight isocyanates to minimize volatility. Cure is obtained through the diffusion of moisture from the atmosphere or the substrates into the adhesive, and subsequent reaction. The final adhesive product is a crosslinked material held together primarily through urea groups and urethane groups. The prior art discloses that the performance of reactive hot melt adhesives for most applications may be substantially improved by the incorporation of low molecular weight acrylic polymers and/or incorporating crystalline diols, e.g. polyesters. Prior art adhesives are tough, with good low temperature flexibility, heat and chemical resistance, and specific adhesion to polar substrates. Adhesion to a wide range of other substrates may be obtained through the addition of adhesion promoters such as silane coupling agents. However, it is more difficult to achieve long open time and/or high green strength at a reasonable application viscosity. High green strength can be achieved by using crystalline materials (e.g polyester diols), however this substantially limits the open time achievable. Alternatively, this can be achieved by the use of polyurethanes with high molecular weight, however the resulting application viscosity is high and the open time is limited. Despite advances in the art, there remains a need for improvements in reactive hot melt technology to expand the application of such adhesives and their effectiveness in such applications.

One way to change the balance of properties of reactive hot melt adhesives is to use dual UV/moisture cure. In the US 6,482,869 B1 is an adhesive described, which is useful in making composites, includes two components A and B, whereas component A includes at least one polymer having at least one functional group polymerizable by irradiation with UV light or with electron beams and has at least one functional group capable of reacting with a compound having at least one acidic hydrogen atom. Component B includes at least one compound having at least two functional groups polymerizable by irradiation with UV light or with electron beams. The WO 99/67340 relates to a hot-melt adhesive with a melting point of at least 40°C, containing either a polymer with at least one functional group that is reactive towards a compound with an acidic hydrogen atom and with one functional group that can be polymerised by UV or electron beams or a polymer with at least one functional group that is reactive towards a compound with an acidic hydrogen atom and with no functional group that can be polymerised by UV or electron radiation and a compound with a functional group that can be polymerised by UV or electron beams and a molecular weight of less than 5'000. The US 2003/0032691 A1 describes an adhesive containing two components A and B, whereby component A comprises both a functional group which can be polymerized by means of irradiation with UV beams as well as at least one functional group which is able to react with a compound having at least one acidic hydrogen atom and component B comprises at least two functional groups which can be polymerized by means of irradiation with UV or electron beams. Such compositions are useful for binding books or packaging, where the UV cure enhances the green strength and the moisture cure provides acceptable adhesion. However, the durability of the ultimate cured bond is insufficient for many applications bonding rigid substrates placed in more extreme environments, such as at high and low temperature and/or high and low moisture.

The US 2006/0083864 A1 relates to radiation curable hot melt composition comprising a) 20 to 100 wt.-% of a radiation curable resin or a mixture of radiation curable resins having a viscosity in the range from 15 to 10'000 mPas in the temperature range from 40°C to 150°C, b) 0 to 50 wt.-% of a hydroxy functional resin or oligomer or a mixture of hydroxy functional resins or oligomers, c) 0 to 10 wt.-% or a photoinitiator, d) 0 to 50 wt.-% of fillers and/ or additives and e) 0 to 40 wt.-% or pigment, wherein the total amount of components a) to e) adds up to 100 wt.-%. This technology does not provide moisture curing, thus giving limited adhesion. Therefore, its use is quite limited.

It was therefore the object of the current invention to propose a composition to be used as adhesive and as coating composition, giving both, excellent green strength and excellent adhesion to rigid and flexible substrates in more extreme environments, such as at high temperature and high moisture conditions. Furthermore, it shall be possible to formulate compositions which have a low content or are even free of volatile organic compounds in the uncured state to reduce potential emissions during application. Additionally, it shall be possible to increase the cross linking density, as well as to achieve good adhesion at elevated temperature with the same adhesive with and without irradiation to broaden the possible application uses of one single composition, thus increasing the versatility of the composition. This again reduces the number of different adhesive and coating formulations which need to be stored by the end user, leading to an optimised supply chain.

It was surprisingly found that the object can be achieved with a solvent-free, reactive composition comprising at least a photoinitiator and a polymer A, capable of reacting under UV-radiation using a photoinitiator and optionally further components, characterised in that the polymer A contains at least one in-chain olefinically unsaturated group and that the polymer A and/ or a polymer B contains further
a) at least two groups capable of reacting in the presence of moisture, and/ or
b) at least two olefinically unsaturated groups in terminal position, and/ or
c) at least one group capable of reacting in the presence of moisture and at least one olefinically unsaturated group in terminal position.

The polymer A is preferably an in-chain olefinically unsaturated polyester, polyurethane and/ or polyamide. Unlike the polymer A, the polymer B is not required to be part of the composition, as long as the polymer A fullfils the requirements regarding reactive groups. It is possible to have one or more than one types of polymer B, which can be the same or different. It can have the same or a similar backbone as polymer A. Thus, it also can have at least one in-chain olefinically unsaturated group, although it can be preferred that its backbone is saturated or has aromatic groups which are unlikely to react upon radiation. However, it is also possible that polymer B has a different backbone. It can be based on homopolymers, copolymers, block-polymers and/ or block-copolymers such as polyolefins, for instance poly(isobutylene), poly(ethylene-co-butylene), polystyrenes, poly(hydroxy styrene), poly(meth-)acrylic acids, polyacrylics, poly(meth-)acrylates, polyalkyl(meth-)acrylates, polyhydroxy alkyl(meth-)acrylates, poly(meth-)acrylamides, polybutadiene, polyethers. poly(ethylene glycol), poly(propylene glycol), polybutylene glycol, polyesters, e.g. formed from the condensation of one or more polyhydric alcohols having from 2 to 40 carbon atoms with one or more polycarboxylic acids having from 2 to 40 carbon atoms, polycarbonates, polyamides, polyimides, polyurethanes, e.g. made from any diol and diisocyanate, polyureas, polyacetals, polysiloxanes, polyvinyl ethers, polyvinyl esters and/ or poly(vinyl acetate). Preferred backbones for polymer B are poly(meth-)acrylates, polyesters, polyethers and polyurethanes, while block polymers and epoxy containing polymers are less preferred.

A specific class of polymers belonging to the polymer B category are difunctional, trifunctional or higher polyfunctional vinyl, allyl and/ or (meth-)acrylate monomers such as divinyl benzene or allylmethacrylate. Polyfunctional acrylate esters of aliphatic diols have preferably 2 to about 40 carbon atoms and include, for example, neopentyl glycol di(meth-)acrylate, 1,6-hexanediol di(meth-)acrylate, diethylene glycol di(meth-)acrylate, triethylene glycol di(meth-)acrylate, dipropylene glycol di(meth-)acrylate, tripropylene glycol di(meth-)acrylate, trimethylolpropane tri(meth-) acrylate, glyceryl propoxy tri(meth)acrylate, tris(2-hydroxyethyl)isocyanurate triacrylate, pentaerythritol tetra(meth-)acrylate, dipentaerythritol hexa(meth-)acrylate, tripentaerythritol octa(meth-)acrylate and (meth-)acrylate esters of sorbitol and of other sugar alcohols. These (meth-) acrylate esters of aliphatic or cycloaliphatic diols may be modified with an aliphatic ester or with an alkylene oxide. The acrylates modified by an aliphatic ester include, for example, neopentyl glycol hydroxypivalate di(meth-)acrylate, caprolactone-modified neopentyl glycol hydroxypivalate di(meth-) acrylates and the like. The alkylene oxide-modified acrylate compounds include, for example, ethylene oxide-modified neopentyl glycol di(meth-)acrylates, propylene oxide-modified neopentyl glycol di(meth-) acrylates, ethylene oxide-modified 1,6-hexanediol di(meth-)acrylates or propylene oxide-modified 1,6-hexanediol di(meth-)acrylates, ethylene oxide-modified trimethylolpropane tri(meth-) acrylate, propylene oxide-modified trimethylolpropane tri(meth-) acrylate, ethylene oxide-modified pentaerythritol tetra(meth-)acrylate, propylene oxide-modified pentaerythritol tetra(meth-)acrylate, or mixtures of two or more thereof. Preferred are poly(meth)acrylates which can contain hydroxyl, amine, thiol and/ or acid groups.

Among the above mentioned difunctional, trifunctional or higher polyfunctional acrylate monomers which can be used in accordance with the invention as polymer B, preference is given to tripropylene glycol diacrylate, neopentyl glycol di(meth-)acrylate, trimethylolpropane tri(meth-)acrylate, pentaerythritol triacrylate and their alkoxylated derivatives.

Both, polymer A and polymer B have at least one reactive end group, which are preferably hydroxyl, carboxyl, amine, isocyanate, alkoxysilane and/ or olefinically unsaturated end groups. One polymer can have the same or different end groups. While it is possible to have any of these combinations present in the inventive composition, it is preferred to have combinations which are fairly stable at both, ambient and application temperature. Hence, when there are hydroxyl and/ or amine groups present, it is less preferred to have also isocyanate groups present in the same composition. However, it is important that at least the polymer A or the polymer B contains at least two groups capable of reacting in the presence of moisture, and/ or at least two olefinically unsaturated groups in terminal position and/ or at least one group capable of reacting in the presence of moisture and at least one olefinically unsaturated group in terminal position. The groups of the polymer A and/ or the polymer B can be the same or different.

In many cases it is preferred that the in-chain olefinically unsaturated group of polymer A is adjacent to at least one carbonyl, carboxyl, amide and/ or ester group and particular adjacent to at least one ester and/ or amide group. However, the in-chain olefinically unsaturated group needs to be reactive enough to react upon radiation with another olefinically unsaturated group. Therefore, aromatic and conjugated olefinically unsaturated group are in general not preferred since they are too stable in this respect.

The polymer A can be of different types. It is possible that there is only one type of polymer A or a mixture of two or of all three types. In a first embodiment, it is a reaction product A1 between i) an unsaturated dicarboxylic acid, an unsaturated dicarboxylic ester and/ or an unsaturated dicarboxylic anhydride and ii) at least one polyol, polyamine and/ or polythiol and iii) optionally at least one saturated or aromatic dicarboxylic acid, saturated or aromatic dicarboxylic ester and/ or saturated or aromatic dicarboxylic anhydride. Most preferably, the molar amounts of polyol, polyamine and/ or polythiol are dosed in excess over the unsaturated dicarboxylic acid, ester or anhydride in order to ensure that the obtained material itself is a polyol, polyamine and/ or polythiol, although with a higher molecular weight.

The polycarboxylic acids, dicarboxylic esters and dicarboxylic anhydrides may have, independent if in-chain unsaturated or not, an aliphatic, cycloaliphatic, araliphatic, aromatic or heterocyclic parent structure and in addition to the at least two carboxylic acid, ester and/ or anhydride groups may further comprise one or more substituents which are nonreactive in a polycondensation, such as halogen atoms or olefinically unsaturated double bonds.

The preferred unsaturated dicarboxylic acids are maleic acid, fumaric acid and/ or itaconic acid, the preferred unsaturated dicarboxylic ester are linear, branched or cyclic C₁- to C₁₂- alkyl ester of a dicarboxylic acid, in particular a C₁- to a C₆- alkyl ester of a dicarboxylic acid and the preferred unsaturated dicarboxylic anhydride is maleic anhydride, itaconic anhydride, tetrahydrophthalic anhydride and/ or endomethylene-tetrahydrophthalic anhydride. Maleic anhydride is particularly preferred.

The optionally used saturated or aromatic dicarboxylic acid, ester and/ or anhydride to obtain polymer A can also be used to obtain polymer B and is preferably a C₂- to about a C₄₀-, in particular a C₂- to about a C₂₄- and/ or a C₃₂- to about a C₄₀-, most preferably a C₂- to about a C₁₂- and/ or a C₃₆- saturated or aromatic dicarboxylic acid, anhydride and/ or corresponding C₁- to a C₁₂- alkyl ester, whereas the preferred C₃₆- saturated or aromatic dicarboxylic acid, anhydride and/ or C₁- to a C₁₂- alkyl ester is the dimer fatty acid, anhydride and/ or C₁- to a C₁₂- alkyl ester. The term dimer fatty acid is well known in the art and refers to the dimerisation product of mono- or polyunsaturated acids and/or esters thereof. Preferred dimer fatty acids are dimers of C₁₀- to a C₃₀, more preferably C₁₂- to a C₂₄, particularly C₁₄- to a C₂₂ and especially C₁₈ alkyl chains. Suitable dimer fatty acids include the dimerisation products of oleic acid, linoleic acid, linolenic acid, palmitoleic acid and elaidic acid. The dimerisation products of the unsaturated fatty acid mixtures obtained in the hydrolysis of natural fats and oils, e.g. sunflower oil, soybean oil, olive oil, rapeseed oil, cottonseed oil and tall oil may also be used. In addition to the dimer fatty acids, dimerisation usually results in varying amounts of oligomeric fatty acids (so called "trimer") and residues of monomeric fatty acids (so-called "monomer"), or esters thereof, being present. Suitable dimer fatty acids have a dimer acid content greater than 60%, preferably greater than 75%, more preferably in the range 90 to 99.5%, particularly 95 to 99%, and especially 97 to 99%. Other suitable polycarboxylic acids, esters and/ or anhydrides are succinic acid, adipic acid, suberic acid, azelaic acid, sebacic acid, glutaric acid, pimelic acid, dimeric fatty acids and trimeric fatty acids, as well as their hydrogenated analogues (for example by using a nickel catalyst), phthalic acid, isopthalic acid, terephthalic acid, trimellitic acid, tetrachlorophthalic acid, hexahydro-phthalic acid, heptane dicarboxylic acid, octane dicarboxylic acid, nonane dicarboxylic acid, decanedicarboxylic acid, undecane dicarboxylic acid, dodecane dicarboxylic acid and higher homologues as well as their corresponding C₁- to C₁₂- alkyl esters and anhydrides. It is possible to use one or mixtures of two or more thereof. If desired, minor amounts of monofunctional fatty acids or esters may be present in the reaction mixture.

In the current invention, the term polyol, polyamine and polythiol stands for compounds with more than one hydroxyl, amine and/ or thiol groups, including alkanolamines, which are compounds having at least one hydroxyl and at least one amine group. These groups are typically in terminal position of a compound, which facilitates the following-up reaction. The amine group can be a primary, secondary and/ or tertiary amine group, whereas primary and secondary amine groups are preferred. The polyol, polyamine and/ or polythiol can be linear, branched and/ or cyclic and is preferably a C₂- to about a C₄₀-, in particular a C₂- to about a C₂₄- and/ or a C₃₂- to about a C₄₀- polyol, polyamine and/ or polythiol. It is in particular preferred when at least one polyol, polyamine and/ or polythiol is a C₂- to about a C₁₂-, and/ or a C₃₆- polyol, polyamine and/ or polythiol. The C₃₆- polyol, polyamine and/ or polythiol is preferably the so called dimer diol or dimer diamine. Dimer diols can be produced by hydrogenation of the corresponding dimer fatty acid. Suitable dimer fatty diols have a dimer diol content greater than 60%, preferably greater than 75%, more preferably in the range 90 to 99.5%, particularly 95 to 99%, and especially 94 to 98%. The polyol, polyamine and/ or polythiol can also be used to obtain polymer B.

Preferred polyols having from 2 to about 40 carbon atoms include ethylene glycol, diethylene glycol, 1,2-propylene glycol, 1,3-propylene glycol, dipropylene glycol, trimethylene glycol, triethylene glycol, tripropylene glycol, 1,4-butylene glycol, 1,6-hexylene glycol, neopentyl glycol, 3-methyl pentane glycol, 2-ethylhexanediol, 1,4,-cyclohexanediol 1,4-bis(hydroxymethyl)cyclohexane, 1,4-cyclohexane dimethanol. Examples of suitable polyhydric alcohols include 1,4,6-octanetriol, glycerol monoallyl ether, glycerol monoethyl ether, 1,2,6-hexanetriol, 1,3,5-hexanetriol, 1,3-bis-(2-hydroxyethoxy) propane 1,1,1-trimethylol propane, 1,1,1-trimethylol ethane and o-methyl glucoside. It is also possible to use polyols such as polyhydroxy ethers, substituted or unsubstituted polyalkylene ether glycols or polyhydroxy polyalkylene ethers, polyhydroxy polyesters, the ethylene or propylene oxide adducts of polyols and the monosubstituted esters of glycerol, as well as mixtures thereof. Examples of polyether polyols include a linear and/or branched polyether having plural numbers of ether bondings and at least two hydroxyl groups. Examples of the polyether polyol may include polyoxyalkylene polyol such as polyethylene glycol, polypropylene glycol, polybutylene glycol and the like. Further, a homopolymer and a copolymer of the polyoxyalkylene polyols may also be employed. Particularly preferable copolymers of the polyoxyalkylene polyols may include an adduct of at least one compound selected from the group consisting of ethylene glycol, propylene glycol, diethylene glycol, triethylene glycol, dipropylene glycol, triethylene glycol, 2-ethylhexanediol-1,3-glycerin, 1,2,6-hexane triol, trimethylol propane, trimethylol ethane, tris(hydroxyphenyl)propane, triethanolamine, triisopropanolamine, ethylenediamine and ethanolamine, with at least one compound selected from the group consisting of ethylene oxide, propylene oxide and butylene oxide. A number of suitable polyols are commercially available. Non-limiting examples include Voranol P400, P725, P1000, P2000, P4000 (Dow). Other alcohols include trialkanolamine, such as triethanolamine, dialkylalkanolamine, such as dialkylethanolamine and/ or dibutylethanolamine, 4-(2-hydroxyethyl)morpholine and/ or bis(O,O'-2-aminoethyl)ethyleneglycol, polyfunctional alcohols such as glycerol and derivatives, trimethylolpropane and alkoxylated derivatives, pentaerythritol and alkoxylated derivatives, dipentaerythritol and alkoxylated derivatives, tripentaerythritol and alkoxylated derivatives, sorbitol, sucrose, glucose, fructose or other sugar alcohols, propoxylated ethylene diamine, propoxylated diethylene triamine and/ or Mannich polyols, as well as perflouroalkyl functional polyols.

Suitable polyamines include the Jeffamine^{™} range such as the polyoxypropylene diamines available as Jeffamine^{™} D230, Jeffamine^{™} D400 and Jeffamine^{™} D2000 as well as Jeffamine^{™} EDR-148, a triethylene glycol diamine. Examples of alkyl substituted branched diamines include 2-methyl-1,5-pentane diamine, 2,2,4-trimethyl-1,6-hexane diamine and 2,4,4-trimethyl-1,6-hexane diamine. Cyclic diamines may also be used, such as isophorone diamine, cyclohexane diamine, piperazine and 4,4'-methylene bis(cyclohexyl amine), 4,4'-2,4'-and 2,2'-diaminodiphenylmethane, tris(2-aminoethyl)amine. Furthermore, primary and/ or secondary amines, such as aliphatic amines, such as 1,2-diamino ethane, oligomers of 1,2-diamino ethane, such as diethylene triamine, triethylene tetramine or pentaethylene hexamine. Suitable examples of alkanolamines include 2-(methyl amino) ethanol, 2-amino-2-methyl propanol, N-methyl diethanol amine, diethanol amine, N-(2-aminoalkyl)dialkanolamine such as N-(2-aminoethyl) diethanolamine and/ or N-(2-aminoethyl)dibutylamine, cyclic structures such as 1-(2-aminoethyl)piperazine, as well as trialkanolamine, in particular triethanolamine, triisopropanolamine, or higher primary and secondary alkanolamines. Preferred polyamines are those having a low skin irritation if left unreacted in the formulation.

It is also possible to use polythiols or polymercaptans. Preferred ones are aliphatic thiols including alkane, alkene and alkyne thiols having at least two or more -SH groups, or at least one thiol and at least one hydroxyl and/ or amine group. Examples are 2,2'-oxytris(ethane thiol) and di- and tri-mercaptopropionate esters of poly(oxyethylene) diols, tris(3-mercaptopropionate), pentaerythritol tetrakis(3-mercaptopropionate), tripentaerythritol octakis(thioglycollate), dipentaerythritol hexakis(thioglycollate), thiodiglycol as well as thiotriglycol. However, it is also possible to have monomercaptanes and/ or thioethers having at least one other heteroatom, preferable Nitrogen and/ or Oxygen. In case of a thioether, it is important that the molecule has at least one further group capable of reacting with isocyanate, such as an alcohol and/ or an amine. Furthermore, it is also possible to use Silicone polyols and/ or polyamines and/ or thiols.

In a second embodiment, the polymer A is a reaction product A2 between the reaction product A1 and at least one compound having a group capable of reacting in the presence of moisture and a group capable of reacting with the reaction product A1. The group capable of reacting in the presence of moisture is preferably an isocyanate and/or an alkoxysilane group. In many cases, this compound has at least two isocyanate groups, but it also can be a compound with at least one isocyanate, epoxide, ester or ketone and at least one alkoxysilane group. Preferably, the alkoxysilane group is a linear or a branched C₁- to C₅- alkoxy group, in particular a C₁- to C₃- alkoxy group. Examples are γ-glycidoxypropyl trimethoxysilane, γ-glycidoxy propylmethyl diethoxysilane, γ-glycidoxypropyl triethoxysilane, 3- isocyanate propyl triethoxysilane, γ-acetoacetate-propyl trimethoxysilane.

There are no restrictions regarding the isocyanates which can be used, as long as it contains at least two isocyanate groups, such as alkylene diisocyanates, cycloalkylene diisocyanates, aromatic diisocyanates and aliphatic-aromatic diisocyanates. Specific examples of suitable isocyanate-containing compounds include, but are not limited to, ethylene diisocyanate, ethylidene diisocyanate, propylene diisocyanate, butylene diisocyanate, trimethylene diisocyanate, hexamethylene diisocyanate, toluene diisocyanate and/ or its trimer, cyclopentylene-1, 3-diisocyanate, cyclo-hexylene-1,4-diisocyanate, cyclohexylene-1,2-diisocyanate, 4,4'-diphenylmethane diisocyanate, 2,4'-diphenylmethane diisocyanate, 2,2-diphenylpropane-4,4'-diisocyanate, xylylene diisocyanate, 1,4-naphthylene diisocyanate, 1,5-naphthylene diisocyanate, m-phenylene diisocyanate, p-phenylene diisocyanate, diphenyl-4,4'-diisocyanate, azobenzene-4,4'-diisocyanate, diphenylsulphone-4,4'-diisocyanate, 2,4-tolylene diisocyanate, dichlorohexamethylene diisocyanate, furfurylidene diisocyanate, 1-chlorobenzene-2,4-diisocyanate, 4,4',4"-triisocyanatotriphenylmethane, 1,3,5-triisocyanatobenzene, 2,4,6-triisocyanatotoluene, 4,4'-dimethyldiphenyl-methane-2,2',5,5-tetratetraisocyanate and the like. While such compounds are commercially available, methods for synthesizing such compounds are well known in the art. In addition, the various isomers of α-,α-,α'-,α'-tetramethyl xylene diisocyanate can be used. Useful aromatic isocyanates include phenylisocyanate, the various isomers of toluene diisocyanate such as 2,4-toluene diisocyanate, 2,6-toluene diisocyanate and/ or mixtures of 2,4- and 2,6-toluene diisocyanate and/ or its trimer, metaxylenediioscyanate and para-xylenediisocyanate, 4-chloro-1,3-phenylene diisocyanate, 1,5-tetrahydro-naphthalene diisocyanate, 4,4'-dibenzyl diisocyanate and 1,2,4-benzene triisocyanate, naphthalene-1,5-diisocyanate, 1-methoxyphenyl-2,4-diisocyanate, 4,4'-diphenylmethane diisocyanate (MDI), 2,4'-diphenylmethane diisocyanate, mixtures of 4,4'-biphenyl diisocyanate, 3,3'-dimethyl-4,4'-biphenyl diisocyanate, 3,3'-dimethyl-4,4'-biphenyl diisocyanate and 3,3'-dimethyldiphenyl methane-4,4'-diisocyanate. Useful aliphatic polyisocyanates include aliphatic diisocyanates such as ethylene diisocyanate, 1,2-diisocyanatopropane, 1,3-diisocyanatopropane, 1,6-diisocyanatohexane, 1,4-butylene diisocyanate, lysine diisocyanate, hexamethylene diisocyanate (HDI), 1,4-methylene bis-(cyclohexylisocyanate). Suitable polymeric polyisocyanates are such as cycloaliphatic and/ or aromatic polyisocyanates and/ or polymethylene polyphenylenes polyisocyanates (polymeric MDI). Included within the useable isocyanates are those modifications containing carbodiimide, allophonate, urethane or isocyanurate structures. Unmodified polymeric MDI and mixtures of polymeric MDI and pure 2,4 and 4,4' MDI and carbodiimide modified MDI are preferred. These polyisocyanates are prepared by conventional methods known in the art, e.g. phosgenation of the corresponding organic amine. Particularly preferred isocyanate-containing compounds are methylene-bis(phenyldiisocyanate) (MDI; 2,4'-MDI, 4,4'-MDI and polymeric MDI), isophorone diisocyanate (IPDI) and/ or its trimer, toluene diisocyanate (TDI) and/ or its trimer, hydrogenated 4,4'-methylenebis(phenylisocyanate) (HMDI) and/ or hexanediisocyanate and/ or its trimer and/ or tetramethylxylylene diisocyanate. The molar ratio of isocyanate to the polyol, polyamine and/ or polythiol is often chosen to have a certain excess of isocyanate.

In a third embodiment, the polymer A is a reaction product A3 between the reaction product A2 and at least one compound being capable of reacting with an isocyanate group and of reacting in the presence of moisture and/ or containing at least one olefinically unsaturated group.

The olefinically unsaturated groups in terminal position are preferably groups capable of undergoing a reaction under radiation using a suitable initiator. Preferred are (meth-) acrylate, vinyl phenyl, allyl ether and/ or a vinyl ether groups. In particular vinyl phenyl and vinyl ether groups are useful since they copolymerize well with the in-chain olefinically unsaturated groups.

Compounds capable of reacting with an isocyanate group and reacting in the presence of moisture are preferably hydroxy-, amino- and/ or thio- functionalised alkoxysilanes such as 3-mercaptopropyl trimethoxysilane, γ-aminopropyltrimethoxysilane, γ-aminopropyltriethoxysilane, N-ethyl-γ-aminoisobutyl trimethoxysilane and/ or N-phenyl-γ-aminopropyl trimethoxysilane.

Compounds capable of reacting with an isocyanate group and containing at least one olefinically unsaturated group are preferably hydroxy-, amino- and/ or thio-functionalised olefinically unsaturated monomers such as hydroxyl, amine and/ or thiol functionalised (meth-)acrylates, vinyl silanes, vinyl ethers and/ or a styrene derivatives. Examples of such suitable functionalized monomers include, but are not limited to 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, dimethylaminoethyl methacrylate, diethylaminoethyl methacrylate, dimethylaminoethyl acrylate, diethylaminoethyl acrylate, N-Methylolallylcarbamate, N-[3-(Dimethylamino) propyl](meth-)acrylamide, N-[3-(Dimethylamino)ethyl](meth-)acrylate, N,N-[3-Chloro-2-hydroxypropyl)-3-dimethylammonium-propyl] (meth-)acrylamide chloride, hydroxypropyleneglycol(meth-)acrylate, hydroxyethyleneglycol(meth-)acrylate, o-, m-, phydroxy styrene, o-, m-, p-hydroxy methylstyrene, and/ or hydroxyl alkyl vinyl ethers, such as 4-hydroxyl butyl vinylether, or mixtures of two or more thereof.

In one preferred embodiment, the molar ratio of the sum of olefinically unsaturated groups in the reactive composition to the sum of moisture curable groups in the reactive composition is about 1 to 1 or higher, preferably about 3 to 1 or higher, in particular about 9 : 1 or higher and most preferably about 9.5 : 1 or higher, and can even have no moisture curable groups, thus being not moisture curable.

In another preferred embodiment, the molar ratio of the sum of olefinically unsaturated groups in the reactive composition to the sum of moisture curable groups in the reactive composition is about 1 to 1 or lower, preferably about 0.75 to 1 or lower, in particular about 0.5 : 1 or lower and most preferably about 0.25 : 1 or lower.

The molecular weight Mn of polymer A and/ or polymer B is preferably between about 500 and about 100'000, in particular between about 1'000 and about 75'000, and most preferably between about 1'000 and about 50'000, determined by Size Exclusion Chromatography (otherwise known as Gel Permeation Chromatography) calibrated against Poly(methyl methacrylate) standards of narrow molecular weight distribution.

The composition must contain a photoinitiator, which can be a free-radical initiator and/or a cationic initiator. They are preferably employed in concentrations ranging from about 0.05 to about 5 wt.-%, in particular in amounts ranging from about 0.2 to about 3 wt.-%, and more preferably from about 0.5 to about 1.5 wt.-%. The concentration is chosen based on the thickness of the application of the uncured radiation curable composition and are preferably used in the least amount necessary to obtain effective initiation of cure at the line speed of the process.

Type 1 photoinitiator, which are photofragmentation initiators, include benzoin alkyl ethers, benzil ketals, acyloxime esters, and acetophenone derivatives, including dialkoxyacetophenones, hydroxyl alkyl ketones, morpholinoketones, chloliranted acetopheneones, acylphosphine oxides and acyl phosphonates. Type 2 photoinitiator, which are hydrogen abstraction photoinitiators, include benzil and derivatives, benzophenone and derivatives, and thioxanthones. Specific examples of photoinitiators are benzyldimethyl ketal, bis(2,6-dimethoxy benzoyl)(2,4,4-trimethyl pentyl)phosphine-oxide, 2-hydroxy-2-methyl-1-phenyl-1-propanone, diphenyl(2,4,6-trimethylbenzoyl) phosphine oxides, 1-hydroxycyclohexyl phenyl ketone, 2-benzyl-2-(dimethylamino)-1-) 4-(4-morpholinyl)phenyl-1-butanone, isopropylthioxanthone, α-,α-dimethoxy-α-phenylacetophenone, 2-methyl-1-4-(methylthio)phenyl-2-(4-morpholinyl)-1-propanone, 2,2-diethoxyacetophenone, 2-hydroxy-1-4-(hydroxyethoxy) phenyl-2-methyl-1-propanone. Combinations of photoinitiators may be used to achieve the best possible cure of adhesive compositions. The cure process is generally more efficient in the absence of oxygen, for example, in the presence of nitrogen, so a greater amount of photoinitiator is generally required in the presence of oxygen. Commercial examples of photoinitiators include Irgacure 819, 907, 2959, 651, 184, 369 and 1700 and Darocur 1173, available from Ciba Speciality Chemicals as well as Genocure LBP available from Rahn and Esacure KIP150 available from Sartomer.

Examples of cationic photoinitiators include sulfonium salts, iodonium salts and onium salts. Preferred among such cationic photoinitiators are sulfonium salts. Particularly preferred among sulfonium salts are aromatic sulfonium salts. Specific examples thereof include triphenylsulfonium salts, methyldiphenylsulfonium salts, dimethylphenylsulfonium salts, diphenylnaphthylsulfonium salts and di(methoxynaphthyl)methylsulfonium salts. Preferred among such aromatic sulfonium salts are aromatic sulfonium salts with hexafluorophosphate ions (PF₆⁻) or hexafluoroantimonate ions (SbF₆⁻) as counter ions. Specific examples include triphenylsulfonium hexafluorophosphate, methyldiphenyl-sulfonium hexafluorophosphate, dimethylphenylsulfonium hexafluorophosphate, diphenylnaphthyl-sulfonium hexafluorophosphate, di(methoxynaphthyl)methyl-sulfonium hexafluoro-phosphate and triarylsulfonium hexafluoroantimonate (e.g. Cyracure UVI6976).

Furthermore, it is also possible to use photoinitiators which are polymer-bonded photoinitiators. Preferably, they are obtained by reacting a low molecular mass photoinitiator having a functional group capable of reacting with an isocyanate, such as an amino or a hydroxyl group, with a high molecular mass compound having at least one isocyanate group.

The preferred photoinitiators are able to initiate free-radical polymerization of olefinically unsaturated double bonds upon radiation. Typical radiation includes UV, Infrared, Near Infrared, X-ray, microwave and/ or electron radiation as well as sonication. Preferred is UV radiation with a wavelength to match the absorption profile of the photoinitiators, which is preferably from about 260 to about 480 nm.

While the adhesives may be used directly as described above, it is often desired to formulate the adhesives with conventional additives. Such additives include plasticizers, tackifiers, which can, if any, be added preferably up to about 30 wt.-%, in particular up to about 20 wt.-%, curing catalysts, monomers, such as monofunctional or multifunctional monomers with a molecular weight of less than 500, dissociation catalysts, fillers, anti-oxidants, pigments, adhesion promoters, wetting agents, waxes, synthetic polymers such as EVA copolymers as well as other homopolymers, copolymers, block-polymers and/ or block-copolymers, non-reactive polymers with the same or different backbone as polymer B, compatibilizers, stabilizers, aliphatic C₅-C₄₀ terpene oligomers and the like. Conventional additives that are compatible with a composition according to this invention may simply be determined by combining a potential additive with the composition and determining if they are compatible. An additive is compatible if it is homogenous within the product. Non-limited examples of suitable additives include rosin, rosin derivatives, rosin ester, aliphatic hydrocarbons, aromatic hydrocarbons, aromatically modified aliphatic hydrocarbons, aliphatically modified aromatic hydrocarbons, terpenes, terpene phenol, modified terpene, high molecular weight hindered phenols and multifunctional phenols such as sulfur and phosphorous-containing phenol, terpene oligomers, dimorpholinodiethyl ether, paraffin waxes, microcrystalline waxes, hydrogenated castor oil, oil diluents, such as olefin oligomers and low molecular weight polymers as well as vegetable and animal oil and their derivatives, alkoxysilane and phosphorous containing adhesion promoters, dehydrating agents, flame retardants, blowing agents, antistatic agents, fungicides, viscosity control agents and the like.

Antioxidants are preferably added to the commercially available compounds in order to protect the ingredients against degradation during preparation and use of the adhesive compositions, however without interfering with the irradiation curing of the polymer. Combinations of antioxidants are often more effective due to the different mechanisms of degradation to which various polymers are subject. Certain hindered phenols, organo-metallic compounds, aromatic amines, aromatic phosphites and sulphur compounds are useful for this purpose. Examples of effective types of these materials include phenolic antioxidants, thio compounds and tris(nonylated phenyl) phosphites. Examples of commercially available antioxidants are: IRGANOX 1010, being pentaerythrityl-tetrakis[3-(3,5-di-tertbutyl-4-hydroxyphenyl)propionate, IONOL, being 2,6-di-tertiary-butyl-4-methyl phenol, IONOX330, being 3,4,6-tris (3,5-di-tertiary-butylphydroxybenzyl)-1,3,5-trimethylbenzene, POLYGARD HR, being tris-(2,4-di-tertiarybutyl-phenyl) phosphite. To ensure long-term thermal stability, in general from about 0.1% to about 3% by weight of one or more antioxidants is included in the adhesive compositions, preferably from about 0.4% by weight to about 1.5% by weight.

Examples of pigments and fillers include, but are not limited to, titanium dioxide, hydrophobic amorphous fumed silica, amorphous precipitated silica, carbon black and polymer powders. Examples of flow and levelling additives, wetting agents and antifoaming agents include silicones, hydrocarbons, fluorine-containing compounds and non-silicone polymers and copolymers such as copolyacrylates.

Further additional materials may be added optionally to the adhesive composition at preferably up to about 15% by weight, in particular from about 5% by weight to about 10% by weight, dependent on the intended end-use of the adhesive. Such additional materials include, without limitation, block copolymers of monovinyl aromatic hydrocarbons and conjugated dienes such as polystyrene-polybutadiene- polystyrene, polystyrene-polyisoprene-polystyrene, poly(alpha-methyl-styrene)- polybutadiene-poly(alpha-methylstyrene), poly(alpha-methyl-styrene)- polyisoprene-poly(alphamethylstyrene), as well as the hydrogenated modifications thereof, e.g. polystyrenepoly(ethylene-butylene)-polystyrene and polystyrene-poly(ethylenepropylene)-polystyrene. Other, non-limiting examples of additional materials include SBR random copolymers with low (<20%) or high (>20%) vinyl contents, available under the trade name DURADENE from Firestone (these high vinyl copolymers are reactive and contribute to the cross linking of the system), EPDM copolymers which can react into the polymer network via unsaturated sites and saturated analogues (e.g. EP rubber) that can modify the peel and tack of the adhesive. These are available from Exxon under the trade name VISTALON, Butyl rubber, which is a copolymer of isoprene and isobutylene and is available from Exxon Chemical Company under the tradename SB BUTYL, Polyisobutylene, available from Exxon Chemical Company under the trade name VISTANEX; and Liquid polyisopropylene such as is available from Kuraray Inc. under the trade name LIR. In addition to the above-described additional materials, the various compositions of the present invention may include other additives known to those skilled in the art. These additives may include, but are not limited to, pigments, fillers, fluorescent additives, flow and levelling additives, wetting agents, surfactants, antifoaming agents, rheology modifiers, stabilizers and antioxidants. Preferred additives are those which do not have appreciable absorption in the wavelengths of interest.

The inventive composition is in one embodiment a reactive adhesive composition, in particular a reactive hot melt adhesive or a reactive solvent-free liquid adhesive. In another embodiment, it is a reactive coating composition, in particular a reactive hot melt coating or a reactive solvent-free liquid coating.

The solvent-free, reactive composition of the current invention is manufactured by mixing at least one polyol, polyamine and/ or polythiol, being the reaction product A1 and/ or a saturated and/ or an aromatic polyol, polyamine and/ or polythiol with at least one compound having at least two isocyanate groups, and the obtained mixture is subjected to conditions allowing the polyol, polyamine and/ or polythiol to react with the isocyanate groups. It is also possible to use a compound with at least one isocyanate, epoxide, ester or ketone and at least one alkoxysilane group instead of the compound having at least two isocyanate groups. Optionally at least one compound can be added which is capable of i) reacting with an isocyanate group and of ii) reacting in the presence of moisture and/ or containing at least one olefinically unsaturated group. The required at least one photoinitiator is preferably added towards the end of the whole mixing process. Furthermore, it is possible to add optionally further components, in particular preformed polymer A and/ or preformed polymer B, which can be added before, during and/ or after the addition of the at least one compound having at least two isocyanate groups.

The polymer A and/ or the polymer B containing olefinically unsaturated groups in terminal position can be manufactured by reacting an isocyanate terminated polymer with a hydroxyl, amine and/ or thiol functionalised, olefinically unsaturated monomer.

These reactions can also occur upon applying the composition to the substrate, hence the precursor formulation to the polymer A and/ or B can be delivered. However, it is often preferred to have them reacted first under controlled conditions, prior to applying the composition to the substrate.

Thus, the reactions are carried out preferably in bulk between about 50°C and 150°C, preferably between about 60 and 130°C. To react an isocyanate with a hydroxyl group, temperatures between about 75°C and 130°C are preferred, in particular between about 90°C and 120°C. However, when an isocyanate is reacted with an amine group, temperatures between about 50°C and 90°C are preferred, in particular between about 60°C and 80°C. It is preferred that the reactions are carried out in absence of oxygen and moisture.

For most applications it is generally preferred that the composition is formulated in a way that the composition has a Brookfield viscosity varying from about 1000 mPas to about 100,000 mPas, preferably from 1000 mPas to about 50,000 mPas, in particular from about 3000 mPas to about 30,000 mPas. It is determined at the temperature at which the composition is applied, which preferably varies from about 60°C to 150°C, in particular from about 80°C to 130°C.

In one embodiment, it is preferred that about 95% or more, in particular about 98% or more of the end groups of polymer A and/ or polymer B consist of groups capable of reacting in the presence of moisture, in particular of isocyanate and/ or alkoxysilane groups. In a further embodiment, it is preferred that about 95% or more, in particular about 98% or more of the end groups of polymer A and/ or polymer B consist of olefinically unsaturated groups. In another embodiment, it is preferred that about 30% to 70%, preferably about 40% to 60% of the end groups of polymer A and/ or polymer B consist of olefinically unsaturated groups, whereas the remainder being preferably groups capable of reacting in the presence of moisture, in particular isocyanate and/ or alkoxysilane groups

The inventive composition can be used as an adhesive to bond two substrates together, wherein the substrates are the same or different, or as a coating.

When the composition is used as a coating, it is preferably applied first as a liquid onto the substrate, optionally followed by adjusting the temperature to about 60°C or higher by e.g. infra-red radiation or other means. Then the applied coating is radiated and optionally subjected to conditions containing moisture, allowing the composition to cool and cure to an irreversible solid form. Such conditions can be just ambient conditions, hence the moisture in the air is often sufficient. However, it is also possible to subject the materials to high humidity conditions.

When the composition is used as an adhesive to bond two substrates together, it is preferably applied first as a liquid onto one substrate, optionally followed by adjusting the temperature to about 60°C or higher by e.g. infra-red radiation or other means. Then the applied adhesive is radiated, covered by the same or another substrate and optionally subjected to conditions containing moisture, allowing the composition to cool and cure to an irreversible solid form. Such conditions are preferably the same as for coatings, hence in most cases there is enough humidity available in or on the substrate or the humidity can penetrate through at least one substrate or through the adhesive bond from the side.

Although radiation is often preferred, it is also possible to omit the radiation step. This is a big advantage since the versatility of using the inventive compositions increase significantly.

The compositions can be used as coatings or as adhesives. Preferably, they are hot melt adhesives, reactive hot melt adhesives, pressures sensitive adhesives, structural adhesives, liquid adhesives, contact adhesives, as well as protective, decorative and/ or functional coatings. They can be applied basically to any substrate, including but not limited to various types of paper, coated paper, cellulose, wood, metals such as aluminium, tin, steel and/ or copper, ceramics, glass and fabrics or textiles, one or different types of synthetic polymers, such as polystyrene, acrylic, polycarbonate, PVC, polyolefin such as polypropylene and/ or polyethylene, ABS, polyester, PET, PEN (polyethylene naphthalate), high pressure laminate, called HPL, polyamide, nylon, polyurethane, whereas the surfaces might have undergone a surface treatment known in the art such as applying primers, flame treatment, plasma treatment such as air plasma treatment and/ or corona treatment.

As such, these coated or bonded substrates find particular use in applications such as the manufacture of doors including entry doors, garage doors and the like, the manufacture of architectural panels, the manufacture of windows, decorative panels, furnitures, flooring, interior and exterior automotive applications. Other non-limiting uses include textile bonding applications (carpet and clothing), use in the manufacture of footwear (shoes), ceramics and tiles. bonding or coating materials in flooring applications, When the compositions are used as an adhesive to bond two substrates together, the substrates can be the same or different.

This invention has many advantages. By using different raw materials to make the polymers A and/ or B, the material characteristics can be adjusted to the specific needs such as flexibility, rigidity, crosslinking density, hardness of the final coating, adhesion characteristics on various substrates, including on low energy surfaces, as well as adjusting the application temperature of the composition. Furthermore, since the in-chain unsaturated group of polymer A is reacting upon UV-radiation, no monomers with an olefinically unsaturated group are required, thus being in particular environmentally friendly due to no or low volatile organic compounds (VOC) present in the formulation. It was also surprisingly found that certain formulations can be used for both, moisture curing alone and in combination with UV radiation. Thus, the same material can be used for two different types of application, thus simplifying the supply chain.

This invention is illustrated by the following non-limiting examples.

### Examples.

### Materials used

Modaflow (Elementis) is a degassing agent.

Voranol P1010 (Dow Chemical) is a polyether diol - poly(propylene glycol) - with a molecular weight Mn = 1000 g per mole.

Voranol P2000 (Dow Chemical) is a polyether diol - poly(propylene glycol) - with a molecular weight Mn = 2000 g per mole.

Elvacite 2971 (Lucite International) is a copolymer of methacrylate monomers with Tg = 50°C and Mn = 55,000 g per mole.

Elvacite 2971 (Lucite International) is a copolymer of methacrylate monomers with Tg = 50°C and Mn = 11,000 g per mole.

Dynacol 7360 (Degussa) is a crystalline saturated copolyester diol with a melting point of 55°C and Mn = 3500 g per mole.

Dynacol 7380 (Degussa) is a crystalline saturated copolyester diol with a melting point of 70°C and Mn = 3500 g per mole.

UCN.100 (Uniqema) is an amorphous unsaturated polyester diol based on dimer diol and maleic anhydride with Mn = 3000 g per mole.

Novares TK100 (Rutgers VFT) is an aliphatically modified aromatic hydrocarbon resin with a softening point of 100°C.

MDI Desmodur 44M Flake (Bayer) is 4,4' - diphenyl methane diisocyanate.

HEA (Aldrich) is 2-hydroxyethyl acrylate.

DMDEE (Alfa Chemicals) is dimorpholinodiethyl ether.

Irganox 1010 (Ciba Specialties) is an antioxidant.

Irgacure 819 (Ciba Specialties) is a bisacyl phosphine oxide photoinitiator.

### Typical Reactive Hot Melt Preparation

Ingredients including polyether polyols, polyester polyols, acrylic copolymers and tackifiers were mixed together at 80 to 100°C in a flange flask equipped with a stirrer and a thermocouple. After allowing time for adequate mixing, vacuum was applied to the flask in order to remove water, preferably for a period of 1 hour during which the temperature was raised to 110°C. The vacuum was removed and the MDI was added. After thorough mixing, the vacuum was reapplied and the reaction between hydroxyl groups and isocyanate groups to produce urethane functional groups was allowed to continue for 1 hour. The product contained chains with terminal -NCO groups, because the molar ratio of the isocyanate to the hydroxyl groups was always larger than 1. After this time, the HEA was added and allowed to react with some of the isocyanate groups. After 1 hour, the DMDEE, antioxidants and photoinitiator were added and mixed for 15 to 30 minutes. The material was removed, cooled and stored. The used formulations are shown in Table 1.

### Determination of the Melt Viscosity

The Melt Viscosity was measured using a Brookfield Viscometer model RVDV-1+ with a Model 74R temperature controller and Thermosel unit, using spindle no. 27. The adhesive was heated in an oven to 120°C. Upon reaching this temperature, 14g of the adhesive was weighed into a disposable aluminium viscometer tube. The tube was inserted into the Viscometer and left to equilibrate to a constant viscosity reading at 120°C for 20 minutes.

### Determination of the Green Strength and Peel Rate

A 150 micron thick film of adhesive, preheated at 120°C, was applied to a glass plate. A 25 mm wide and 0.2 mm thick PVC strip with a hole punched near one end was applied over the adhesive. The plate was inverted and a thermocouple was attached to the glass plate to record the temperature as it falls. At a suitable temperature, preferably at 40°C, a 1 Newton weight was suspended from the hole in the PVC and the time was set at t = 0. At 1 minute intervals, the temperature and distance moved was recorded. The peel rate (mm/minute) at these intervals was calculated to provide a comparison of green strength (low peel rate = high green strength). Green strength was measured before and after the application of UV light, which was applied within 1 minute of coating on to glass and before application of the PVC strip.

### Determination of the Open time

The adhesive was preheated to 120°C and a 150 micron thick film was applied to MDF (Medium Density Fibre board) and the time was set at t = 0. The adhesive was allowed to cool towards room temperature within 30 seconds. At intervals of 30 seconds or 1 minute, a paper strip was applied using a 2.0 Kg roller across the surface of the paper in contact with the adhesive. The paper was then removed immediately. The open time limit occurs when there was no paper tear resulting from a lack of adequate wetting of the paper by the adhesive. Open time was measured before and after the application of UV light which was applied within 1 minute of coating on to the MDF.

### Determination of the Rheology

Rheology of the material was evaluated using a TA Instruments AR 2000 rheometer in oscillatory mode with 0.1% strain and an angular frequency of 10 radians per second. Parallel plates were used at a cooling rate of 3°C per minute over a temperature range of 120°C to -50°C and a 1500 micron gap. The storage modulus was measured before application of UV light, 2 hours after application of UV light and then after a further 7 days exposure to ambient temperature/humidity. Before application of UV, the material was loaded as a liquid. For measurements 2 hours after application of UV light and after 7 days moisture cure, 150 micron films were prepared and a number of films were overlayed and compressed to fill the gap. These 150 micron films were prepared by preheating the adhesive to 120C and coating on to silicone release paper. The films quickly cooled to room temperature and UV light was applied within 1 minute.

### Determination of the Adhesion

The formulated adhesives as shown in Table 1 were preheated to 120 °C and coated on to chipboard at room temperature with a coat weight of 100 gsm. Optionally, UV light was applied to the surface within 1 minute and a second surface of HPL (high pressure laminate) was applied on top. After 7 days at ambient temperature/humidity,
(a) the substrates were separated by hand and the amount of chipboard tear was noted. The data are recorded in Table 2 as "Adhesion at RT (% substrate failure)".
(b) In a separate test, the assembly was further subjected to heating for 7 hours at 80°C and the hot substrates were immediately separated by hand and the amount of substrate tear was noted. The data are recorded in Table 2 as "Adhesion at 80°C (% substrate failure)".
(c) In a separate test, the assembly was placed in water for 3 days at ambient temperature before the substrates were separated by hand and the amount of chipboard tear was noted. The data are recorded in Table 2 as "Adhesion/ water resistance (% substrate failure)".

### Application of UV light

The applied adhesives were exposed to UV light using IST UV curing equipment containing a 200W Fe doped medium pressure Hg lamp and a conveyor belt. Conditions were set up to provide a measured dose of 500 mJ/cm2 UVA radiation.

**Table 1: Compositions of the applied inventive (Ex-1 and Ex-2) and comparison (Ref-1, Ref-2 and Ref-3) formulations.**

| | Ref-1 ^{a)} | Ref-2 ^{b)} | Ex-1 ^{c)} | Ref-3 ^{b)} | Ex-2 ^{c)} |
|---|---|---|---|---|---|
| Modaflow | 0.1 | 0.1 | 0.1 | 0.1 | 0.1 |
| Voranol P1010 | - | - | - | 18.9 | 18.9 |
| Voranol P2000 | 38.7 | 38.2 | 38.2 | 17.24 | 17.24 |
| Elvacite 2971 | 13.3 | 13.15 | 13.15 | 12.4 | 13.6 |
| Elvacite 2903 | 11.7 | 11.5 | 11.5 | 10.9 | 12.0 |
| Dynacol 7360 | 12.4 | 9.2 | - | 8.7 | - |
| Dynacol 7380 | 0.9 | 3.9 | - | 3.7 | - |
| UCN.100 | - | - | 11.2 | - | 11.0 |
| Novares TK100 | 11.1 | 11.0 | 11.4 | 10.4 | 11.4 |
| MDI | 11.6 | 11.4 | 11.8 | 15.55 | 15.6 |
| HEA | - | 1.25 | - | 1.8 | - |
| DMDEE | 0.2 | 0.17 | 0.17 | 0.17 | 0.17 |
| Irganox 1010 | - | 0.5 | 0.5 | 0.5 | 0.5 |
| Irgacure 819 | - | 0.6 | 0.6 | 0.6 | 0.6 |

| | | | | | |
|---|---|---|---|---|---|
| a) Ref-1 is a moisture curable isocyanate functional formulation without UV curable functionality. b) Ref-2 and Ref-3 are dual UV/moisture curable formulations with olefinically unsaturated groups in terminal position and groups capable of reacting in the presence of moisture (isocyanate functionality). c) Ex-1 and Ex-2 are dual UV/moisture curable formulation with in-chain unsaturation and groups capable of reacting in the presence of moisture (isocyanate functionality) without olefinically unsaturated groups in terminal position. | | | | | |

**Table 2: Measured properties at various conditions of the tested formulations according to Table 1. For the determination of the melt viscosity, open time, peel rate and adhesion values, see text.**

| | UV cure ^{a)} | moist. cure ^{b)} | Ref-1 | Ref-2 | Ex-1 | Ref-3 | Ex-2 |
|---|---|---|---|---|---|---|---|
| Melt viscosity at 120°C (cP) | N/A ^{c)} | N/A ^{c)} | 12000 | 3500 | 15100 | 3400 | 18200 |
| Open time [min] | no | no | 7 | 8 | 10 | 7 | 11 |
| | yes | no | N/A ^{c)} | 7 | 6 | 2 | 7 |
| Peel rate at 50°C [mm/min] | no | no | >100 | >100 | 80 | >100 | 80 |
| | yes | no | N/A ^{c)} | 5 | 20 | 20 | 15 |
| Adhesion at RT (% substrate failure) | no | yes | 90 | 100 | 100 | 90 | 90 |
| | yes | yes | N/A ^{c)} | 100 | 100 | 80 | 90 |
| Adhesion at 80°C (% substrate failure) | no | yes | 80 | 0 | 100 | 0 | 0 |
| | yes | yes | N/A ^{c)} | 40 | 80 | 80 | 80 |
| Adhesion/water | no | yes | 100 | 30 | 100 | 15 | 15 |
| resistance (% substrate failure) | yes | yes | N/A^{c)} | 90 | 100 | 10 | 60 |

| | | | | | | | |
|---|---|---|---|---|---|---|---|
| a) A radiation dose of 500 mJ/cm2 UVA was applied. b) Materials were tested after leaving for 7 days at ambient temperature/humidity. c) N/A stands for "not applicable". | | | | | | | |

The dual UV/moisture curable compositions Ref-2 and Ref-3 show high green strength (low peel rate) compared to moisture curable Ref-1 but adhesion at 80°C and/or water resistance are worse.

However, dual UV/moisture curable compositions of the invention Ex-1 and Ex-2, where the UV curable functionality is in-chain and having no olefinically unsaturated groups in terminal position, show the best balance of properties with advances over the prior art, showing both high green strength and good adhesion at 80°C and/or water resistance. Additionally, they also have a low melt viscosity and a good open time.

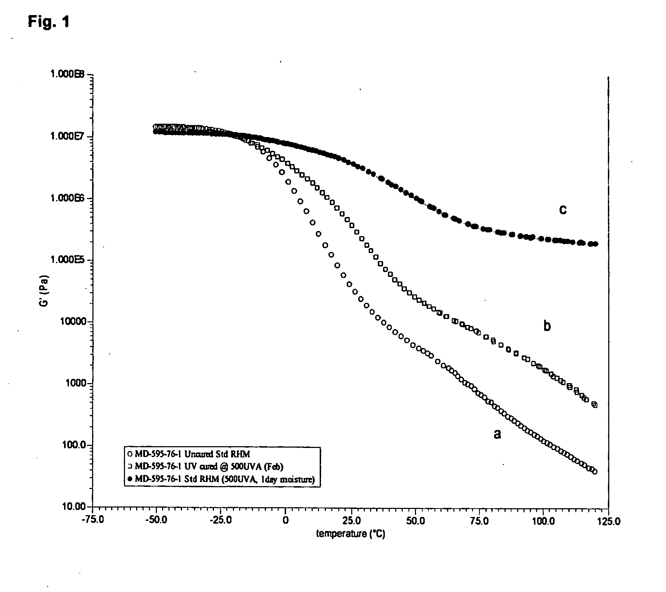

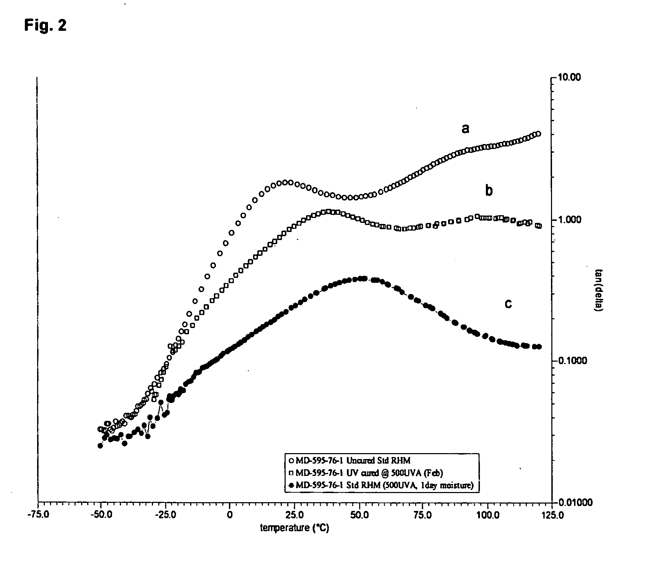

The rheology of Ex-1 containing in-chain unsaturation and groups capable of reacting in the presence of moisture (isocyanate groups in terminal position) are plotted in Fig. 1 and Fig. 2. The material was measured uncured (curve a), immediately after UV cure (curve b) and after moisture cure (curve c). Fig. 1 shows the increase in stiffness (G') and Fig. 2 the reduction in tan delta (liquid like behaviour).

## Claims

1. Solvent-free, reactive composition comprising at least a photoinitiator and a polymer A, capable of reacting under UV-radiation using a photoinitiator and optionally further components, **characterised in that** the polymer A contains at least one in-chain olefinically unsaturated group and that the polymer A and/ or a polymer B contains further
a) at least two groups capable of reacting in the presence of moisture, and/ or
b) at least two olefinically unsaturated groups in terminal position, and/ or
c) at least one group capable of reacting in the presence of moisture and at least one olefinically unsaturated group in terminal position.

2. Composition according to claim 1, **characterised in that** the polymer A is an in-chain olefinically unsaturated polyester, polyurethane and/ or polyamide and has at least one hydroxyl, carboxyl, amine, isocyanate, alkoxysilane and/ or olefinically unsaturated end groups.

3. Composition according to claim 1 or 2, **characterised in that** the in-chain olefinically unsaturated group is adjacent to at least one carbonyl, carboxyl, amide and/ or ester group, in particular adjacent to at least one ester and/ or amide group.

4. Composition according to at least one of the claims 1 to 3, **characterised in that** the polymer A is 1) a reaction product A1 between i) an unsaturated dicarboxylic acid, an unsaturated dicarboxylic ester and/ or an unsaturated dicarboxylic anhydride and ii) at least one polyol, polyamine and/ or polythiol and iii) optionally at least one saturated or aromatic dicarboxylic acid, saturated or aromatic dicarboxylic ester and/ or saturated or aromatic dicarboxylic anhydride and/ or 2) a reaction product A2 between A1 and at least one compound having at least two isocyanate groups and/ or 3) a reaction product A3 between A2 and iv) at least one compound being capable of reacting with an isocyanate group and of reacting in the presence of moisture and/ or containing at least one olefinically unsaturated group.

5. Composition according to claim 4, **characterised in that** the unsaturated dicarboxylic acid is maleic acid, fumaric acid and/ or itaconic acid, the unsaturated dicarboxylic ester is a C₁- to a C₁₂- alkyl ester of a dicarboxylic acid and the unsaturated dicarboxylic anhydride is maleic and/ or itaconic anhydride.

6. Composition according to claims 4 or 5, **characterised in that** at least one polyol and/ or polyamine is a C₂- to about a C₄₀-, preferably a C₂- to about a C₂₄- and/or a C₃₂- to about a C₄₀-, in particular a C₂- to about a C₁₂- and/ or a C₃₆- polyol and/ or polyamine.

7. Composition according to at least one of the claims 4 to 6, **characterised in that** the optional saturated or aromatic dicarboxylic acid, ester and/ or anhydride is a C₂- to about a C₄₀-, preferably a C₂- to about a C₂₄- and/ or a C₃₂- to about a C₄₀- , in particular a C₂- to about a C₁₂- and/ or a C₃₀- saturated or aromatic dicarboxylic acid, anhydride and/ or corresponding C₁- to a C₁₂- alkyl ester.

8. Composition according to at least one of the preceding claims, **characterised in that** the molecular weight Mn of polymer A and/ or polymer B is between about 500 and about 100'000, preferably between about 1'000 and about 75'000, in particular between about 1'000 and about 50'000.

9. Composition according to at least one of the preceding claims, **characterised in that** the group capable of reacting in the presence of moisture is an isocyanate and/ or an alkoxysilane group.

10. Composition according to at least one of the preceding claims, **characterised in that** the olefinically unsaturated group in terminal position is a (meth-)acrylate, vinyl phenyl and/ or a vinyl ether group.

11. Composition according to at least one of the preceding claims, **characterised in that** the molar ratio of the sum of olefinically unsaturated groups in the reactive composition to the sum of moisture curable groups in the reactive composition is about 1 to 1 or higher, preferably about 3 to 1 or higher, in particular about 9 : 1 or higher.

12. Composition according to at least one of the claims 1 to 10, **characterised in that** the molar ratio of the sum of olefinically unsaturated groups in the reactive composition to the sum of moisture curable groups in the reactive composition is about 1 to 1 or lower, preferably about 0.75 to 1 or lower, in particular about 0.5 : 1 or lower.

13. Composition according to at least one of the preceding claims, **characterised in that** the photoinitiator is a free-radical initiator and/ or a cationic initiator.

14. Composition according to at least one of the preceding claims, **characterised in that** the optional further components are tackifiers, adhesion promoters, wetting agents, monomers, pigments, fillers, stabilizers, waxes, EVA copolymers, nonreactive polymers, plasticizers, anti-oxidants and/ or compatibilizers.

15. Composition according to at least one of the preceding claims, **characterised in that** the composition is a reactive adhesive composition, in particular a reactive hot melt adhesive or a reactive solvent-free liquid adhesive, or a reactive coating composition, in particular a reactive hot melt coating or a reactive solvent-free liquid coating.

16. Use of the composition according to at least one of the claims 1 to 15 as an adhesive to bond two substrates together, wherein the substrates are the same or different, or as a coating.

17. Use according to claim 16 for an adhesive to bond two substrates together, **characterised in that** the composition is 1) applied as a liquid onto one substrate, 2) optionally temperature adjusted, optionally by infra-red radiation, to about 60°C or higher, 3) radiated, 4) covered by the same or another substrate and 5) optionally subjected to conditions containing moisture, allowing the composition to cool and cure to an irreversible solid form.

18. Use according to claim 16 for coating a surface on a substrate, **characterised in that** the composition is 1) applied as a liquid onto the substrate, 2) optionally temperature adjusted, optionally by infra-red radiation, to about 60°C or higher, 3) radiated and optionally 4) subjected to conditions containing moisture, allowing the composition to cool and cure to an irreversible solid form.

19. Use according to at least one of the claims 16 to 18 without UV-radiation.

20. Use according to at least one of the claims 16 to 19, **characterised in that** the substrate is paper, wood, metal, ceramic, one or different synthetic polymers, glass, fabrics and/ or textiles.

## Patentansprüche

1. Lösungsmittelfreie, reaktive Zusammensetzung, die mindestens einen Photoinitiator und ein Polymer A, das unter UV-Strahlung unter Verwendung eines Photoinitiators reagieren kann, und gegebenenfalls weitere Komponenten umfasst, **dadurch gekennzeichnet, dass** das Polymer A mindestens eine olefinisch ungesättigte Gruppe in der Kette enthält und dass das Polymer A und/oder ein Polymer B weiterhin Folgendes enthält:
a) mindestens zwei Gruppen, die in Gegenwart von Feuchtigkeit reagieren können, und/oder
b) mindestens zwei olefinisch ungesättigte Gruppen in der terminalen Stellung und/oder
c) mindestens eine Gruppe, die in Gegenwart von Feuchtigkeit reagieren kann, und mindestens eine olefinisch ungesättigte Gruppe in der terminalen Stellung.

2. Zusammensetzung nach Anspruch 1, **dadurch gekennzeichnet, dass** das Polymer A ein in der Kette olefinisch ungesättigter Polyester, Polyurethan und/oder Polyamid ist und mindestens eine Hydroxyl-, Carboxyl-, Amin-, Isocyanat-, Alkoxysilan- und/oder olefinisch ungesättigte Endgruppen aufweist.

3. Zusammensetzung nach Anspruch 1 oder 2, **dadurch gekennzeichnet, dass** die olefinisch ungesättigte Gruppe in der Kette zu mindestens einer Carbonyl-, Carboxyl-, Amid- und/oder Estergruppe benachbart ist, insbesondere zu mindestens einer Ester- und/oder Amidgruppe benachbart ist.

4. Zusammensetzung nach mindestens einem der Ansprüche 1 bis 3, **dadurch gekennzeichnet, dass** das Polymer A 1) ein Reaktionsprodukt A1 zwischen i) einer ungesättigten Dicarbonsäure, einem ungesättigten Dicarbonsäureester und/oder einem ungesättigten Dicarbonsäureanhydrid und ii) mindestens einem Polyol, Polyamin und/oder Polythiol und iii) gegebenenfalls mindestens einer gesättigten oder aromatischen Dicarbonsäure, einem gesättigten oder aromatischen Dicarbonsäureester und/oder einem gesättigten oder aromatischen Dicarbonsäureanhydrid und/oder 2) ein Reaktionsprodukt A2 zwischen A1 und mindestens einer Verbindung mit mindestens zwei Isocyanatgruppen und/oder 3) ein Reaktionsprodukt A3 zwischen A2 und iv) mindestens einer Verbindung, die mit einer Isocyanatgruppe reagieren kann und in Gegenwart von Feuchtigkeit reagieren kann und/oder mindestens eine olefinisch ungesättigte Gruppe enthält, ist.

5. Zusammensetzung nach Anspruch 4, **dadurch gekennzeichnet, dass** es sich bei der ungesättigten Dicarbonsäure um Maleinsäure, Fumarsäure und/oder Itaconsäure handelt, es sich bei dem ungesättigten Dicarbonsäureester um einen C₁- bis C₁₂-Alkylester einer Dicarbonsäure handelt und es sich bei dem ungesättigten Dicarbonsäureanhydrid um Maleinsäure- und/oder Itaconsäureanhydrid handelt.

6. Zusammensetzung nach Anspruch 4 oder 5, **dadurch gekennzeichnet, dass** mindestens ein Polyol und/oder Polyamin ein C₂- bis etwa C₄₀-, vorzugsweise ein C₂- bis etwa C₂₄- und/oder ein C₃₂- bis etwa C₄₀-, insbesondere ein C₂- bis etwa C₁₂- und/oder ein C₃₆-Polyol und/oder -Polyamin ist.

7. Zusammensetzung nach mindestens einem der Ansprüche 4 bis 6, **dadurch gekennzeichnet, dass** die optionale gesättigte oder aromatische Dicarbonsäure, der optionale gesättigte oder aromatische Dicarbonsäureester und/oder das optionale gesättigte oder aromatische Dicarbonsäureanhydrid eine gesättigte oder aromatische bzw. ein gesättigtes oder aromatisches C₂- bis etwa C₄₀-, vorzugsweise eine gesättigte oder aromatische bzw. ein gesättigtes oder aromatisches C₂- bis etwa C₂₄- und/oder eine gesättigte oder aromatische bzw. ein gesättigtes oder aromatisches C₃₂- bis etwa C₄₀-, insbesondere eine gesättigte oder aromatische bzw. ein gesättigtes oder aromatisches C₂- bis etwa C₁₂- und/oder eine gesättigte oder aromatische bzw. ein gesättigtes oder aromatisches C₃₆-Dicarbonsäure, -Dicarbonsäureanhydrid und/oder ein entsprechender C₁- bis C₁₂-Alkylester ist.

8. Zusammensetzung nach mindestens einem der vorherigen Ansprüche, **dadurch gekennzeichnet, dass** das Molekulargewicht Mn des Polymers A und/oder des Polymers B zwischen etwa 500 und etwa 100.000, vorzugsweise zwischen etwa 1000 und etwa 75.000, insbesondere zwischen etwa 1000 und etwa 50.000 liegt.

9. Zusammensetzung nach mindestens einem der vorherigen Ansprüche, **dadurch gekennzeichnet, dass** es sich bei der Gruppe, die in Gegenwart von Feuchtigkeit reagieren kann, um eine Isocyanatgruppe und/oder eine Alkoxysilangruppe handelt.

10. Zusammensetzung nach mindestens einem der vorherigen Ansprüche, **dadurch gekennzeichnet, dass** es sich bei der olefinisch ungesättigten Gruppe in der terminalen Stellung um eine (Meth-)Acrylatgruppe, eine Vinylphenylgruppe und/oder eine Vinylethergruppe handelt.

11. Zusammensetzung nach mindestens einem der vorherigen Ansprüche, **dadurch gekennzeichnet, dass** das Molverhältnis der Summe von olefinisch ungesättigten Gruppen in der reaktiven Zusammensetzung zu der Summe von feuchtigkeitshärtenden Gruppen in der reaktiven Zusammensetzung etwa 1 zu 1 oder höher, vorzugsweise etwa 3 zu 1 oder höher, insbesondere etwa 9:1 oder höher ist.

12. Zusammensetzung nach mindestens einem der Ansprüche 1 bis 10, **dadurch gekennzeichnet, dass** das Molverhältnis der Summe von olefinisch ungesättigten Gruppen in der reaktiven Zusammensetzung zu der Summe von feuchtigkeitshärtenden Gruppen in der reaktiven Zusammensetzung etwa 1 zu 1 oder niedriger, vorzugsweise etwa 0,75 zu 1 oder niedriger, insbesondere etwa 0,5:1 oder niedriger ist.

13. Zusammensetzung nach mindestens einem der vorherigen Ansprüche, **dadurch gekennzeichnet, dass** es sich bei dem Photoinitiator um einen Radikalinitiator und/oder einen kationischen Initiator handelt.

14. Zusammensetzung nach mindestens einem der vorherigen Ansprüche, **dadurch gekennzeichnet, dass** die optionalen weiteren Komponenten Klebrigmacher, Haftvermittler, Benetzungsmittel, Monomere, Pigmente, Füllstoffe, Stabilisatoren, Wachse, EVA-Copolymere, nicht-reaktive Polymere, Weichmacher, Antioxidationsmittel und/oder Verträglichkeitsvermittler sind.

15. Zusammensetzung nach mindestens einem der vorherigen Ansprüche, **dadurch gekennzeichnet, dass** es sich bei der Zusammensetzung um eine reaktive Klebstoffzusammensetzung, insbesondere einen reaktiven Hotmeltklebstoff oder einen reaktiven lösungsmittelfreien flüssigen Klebstoff, oder eine reaktive Beschichtungszusammensetzung, insbesondere eine reaktive Hotmeltbeschichtung oder eine reaktive lösungsmittelfreie flüssige Beschichtung, handelt.

16. Verwendung der Zusammensetzung nach mindestens einem der Ansprüche 1 bis 15 als ein Klebstoff zum Zusammenkleben von zwei Substraten, wobei die Substrate gleich oder verschieden sind, oder als eine Beschichtung.

17. Verwendung nach Anspruch 16 für einen Klebstoff zum Zusammenkleben von zwei Substraten, **dadurch gekennzeichnet, dass** die Zusammensetzung 1) als eine Flüssigkeit auf ein Substrat aufgebracht wird, 2) gegebenenfalls die Temperatur auf etwa 60°C oder höher eingestellt wird, gegebenenfalls durch Infrarotstrahlung, 3) bestrahlt wird, 4) mit demselben oder einem anderen Substrat abgedeckt wird und 5) gegebenenfalls Bedingungen ausgesetzt wird, die Feuchtigkeit beinhalten, wodurch ermöglicht wird, dass die Zusammensetzung abkühlt und zu einer unumkehrbar festen Form aushärtet.

18. Verwendung nach Anspruch 16 zum Beschichten einer Oberfläche auf einem Substrat, **dadurch gekennzeichnet, dass** die Zusammensetzung 1) als eine Flüssigkeit auf das Substrat aufgebracht wird, 2) gegebenenfalls die Temperatur auf etwa 60 °C oder höher eingestellt wird, gegebenenfalls durch Infrarotstrahlung, 3) bestrahlt wird und gegebenenfalls 4) Bedingungen ausgesetzt wird, die Feuchtigkeit beinhalten, wodurch ermöglicht wird, dass die Zusammensetzung abkühlt und zu einer unumkehrbar festen Form aushärtet.

19. Verwendung nach mindestens einem der Ansprüche 16 bis 18 ohne UV-Strahlung.

20. Verwendung nach einem der Ansprüche 16 bis 19, **dadurch gekennzeichnet, dass** es sich bei dem Substrat um Papier, Holz, Metall, Keramik, ein oder unterschiedliche synthetische Polymere, Glas, Gewebe und/oder Textilien handelt.

## Revendications

1. Composition réactive, sans solvant, comprenant au moins un photo-initiateur et un polymère A, capable de réagir sous irradiation UV en utilisant un photo-initiateur et éventuellement des composants supplémentaires, **caractérisée en ce que** le polymère A contient au moins un groupe oléfiniquement insaturé dans la chaîne et que le polymère A et/ou **en ce qu'**un polymère B contient en plus
a) au moins deux groupes capables de réaction en présence d'humidité, et/ou
b) au moins deux groupes oléfiniquement insaturés en position terminale, et/ou
c) au moins un groupe capable de réaction en présence d'humidité et au moins un groupe oléfiniquement insaturé en position terminale.

2. Composition selon la revendication 1, **caractérisée en ce que** le polymère A est un polyester, un polyuréthane et/ou un polyamide oléfiniquement insaturé(s) dans la chaîne et a au moins un groupe hydroxyle, carboxyle, amine, isocyanate, alcoxysilane et/ou des groupes terminaux oléfiniquement insaturés.

3. Composition selon la revendication 1 ou 2, **caractérisée en ce que** le groupe oléfiniquement insaturé dans la chaîne est adjacent à au moins un groupe carbonyle, carboxyle, amide et/ou ester, en particulier adjacent à au moins un groupe ester et/ou amide.

4. Composition selon au moins l'une des revendications 1 à 3, **caractérisée en ce que** le polymère A est 1) un produit réactionnel A1 entre i) un acide dicarboxylique insaturé, un ester dicarboxylique insaturé et/ou un anhydride dicarboxylique insaturé et ii) au moins un polyol, une polyamine et/ou un polythiol et iii) éventuellement au moins un acide dicarboxylique saturé ou aromatique, ester dicarboxylique saturé ou aromatique et/ou anhydride dicarboxylique saturé ou aromatique et/ou 2) un produit réactionnel A2 entre A1 et au moins un composé ayant au moins deux groupes isocyanate et/ou 3) un produit réactionnel A3 entre A2 et iv) au moins un composé étant capable de réaction avec un groupe isocyanate et de réaction en la présence d'humidité et/ou contenant au moins un groupe oléfiniquement insaturé.

5. Composition selon la revendication 4, **caractérisée en ce que** l'acide dicarboxylique insaturé est l'acide maléique, l'acide fumarique et/ou l'acide itaconique, l'ester dicarboxylique insaturé est un ester d'alkyle en C₁ à C₁₂ d'un acide dicarboxylique et l'anhydride dicarboxylique insaturé est l'anhydride maléique et/ou itaconique.

6. Composition selon les revendications 4 ou 5, **caractérisée en ce qu'**au moins un polyol et/ou une polyamine est un polyol et/ou une polyamine en C₂ à environ C₄₀, de préférence C₂ à environ C₂₄ et/ou C₃₂ à environ C₄₀, en particulier C₂ à environ C₁₂ et/ou C₃₆.

7. Composition selon au moins l'une des revendications 4 à 6, **caractérisée en ce que** l'acide dicarboxylique, l'ester et/ou l'anhydride saturé ou aromatique facultatif, est un acide, anhydride dicarboxylique saturé ou aromatique en C₂ à environ C₄₀, de préférence C₂ à environ C₂₄ et/ou C₃₂ à environ C₄₀, en particulier C₂ à environ C₁₂, et/ou C₃₆ et/ou un ester d'alkyle correspondant en C₁ à C₁₂.

8. Composition selon au moins l'une des revendications précédentes, **caractérisée en ce que** le poids moléculaire Mn du polymère A et/ou du polymère B est compris entre 500 et environ 100 000, de préférence entre environ 1 000 et environ 75 000, en particulier entre environ 1 000 et environ 50 000.

9. Composition selon au moins l'une des revendications précédentes, **caractérisée en ce que** le groupe capable de réaction en présence d'humidité est un groupe isocyanate et/ou alcoxysilane.

10. Composition selon au moins l'une des revendications précédentes, **caractérisée en ce que** le groupe oléfiniquement insaturé en position terminale est un groupe (méth-)acrylate, vinyl phényle et/ou éther de vinyle.

11. Composition selon au moins l'une des revendications précédentes, **caractérisée en ce que** le rapport molaire de la somme des groupes oléfiniquement insaturés dans la composition réactive sur la somme des groupes durcissables à l'humidité dans la composition réactive est d'environ 1 à 1 ou supérieur, de préférence d'environ 3 à 1 ou supérieur, en particulier d'environ 9 : 1 ou supérieur.

12. Composition selon au moins l'une des revendications 1 à 10, **caractérisée en ce que** le rapport molaire de la somme des groupes oléfiniquement insaturés dans la composition réactive à la somme des groupes durcissables à l'humidité dans la composition réactive est d'environ 1 à 1 ou inférieur, de préférence d'environ 0,75 à 1 ou inférieur, en particulier d'environ 0,5 : 1 ou inférieur.

13. Composition selon au moins l'une des revendications précédentes, **caractérisée en ce que** le photo-initiateur est un initiateur de radicaux libres et/ou un initiateur cationique.

14. Composition selon au moins l'une des revendications précédentes, **caractérisée en ce que** les composants facultatifs supplémentaires sont des agents donnant du collant, des agents favorisant l'adhésion, des agents mouillants, des monomères, des pigments, des charges, des agents stabilisants, des cires, des copolymères EVA, des polymères non réactifs, des plastifiants, des anti-oxydants et/ou des agents de compatibilité.

15. Composition selon au moins l'une des revendications précédentes, **caractérisée en ce que** la composition est une composition adhésive réactive, en particulier un adhésif thermofusible réactif ou un adhésif liquide réactif sans solvant, ou une composition réactive de revêtement, en particulier un revêtement thermofusible réactif ou un revêtement liquide réactif sans solvant.

16. Utilisation de la composition selon au moins l'une des revendications 1 à 15, comme adhésif pour lier ensemble deux substrats, dans laquelle les substrats sont identiques ou différents, ou comme revêtement.

17. Utilisation selon la revendication 16 pour un adhésif afin de lier deux substrats ensembles, **caractérisée en ce que** la composition est 1) appliquée sous la forme d'un liquide sur un substrat, 2) éventuellement ajustée à la température, éventuellement par irradiation infrarouge, jusqu'à environ 60°C ou supérieur, 3) irradiée, 4) recouverte du même substrat ou d'un autre substrat et 5) éventuellement soumise à des conditions humides, permettant à la composition de refroidir et de durcir sous une forme solide irréversible.

18. Utilisation selon la revendication 16 pour le revêtement d'une surface sur un substrat, **caractérisée en ce que** la composition est 1) appliquée sous la forme d'un liquide sur le substrat, 2) éventuellement ajustée à la température, éventuellement par irradiation infrarouge, jusqu'à environ 60°C ou supérieur, 3) irradiée et éventuellement 4) soumise à des conditions humides, permettant à la composition de refroidir et de durcir jusqu'à une forme solide irréversible.

19. Utilisation selon au moins l'une des revendications 16 à 18 sans irradiation UV.

20. Utilisation selon au moins l'une des revendications 16 à 19, **caractérisée en ce que** le substrat est du papier, du bois, du métal, de la céramique, un polymère synthétique ou des polymères synthétiques différents, du verre, de l'étoffe et/ou des textiles.
